# NEW EUROPEAN PATENT SPECIFICATION

(11) **EP 0 433 335 B2**
(45) Date of publication and mention of the opposition decision: **05.03.1997**
(45) Mention of the grant of the patent: 16.03.1994
(21) Application number: 89909883.4
(22) Date of filing: 06.09.1989
(51) Int. Cl.: F16L 21/02

(54) **METHOD OF PROVIDING A JOINT BETWEEN TWO COMPONENTS**
VERFAHREN ZUR BILDUNG EINER VERBINDUNG ZWISCHEN ZWEI KOMPONENTEN
PROCEDE DE FORMATION D'UN JOINT ENTRE DEUX ELEMENTS

(30) Priority: 07.09.1988 SE 8803135
(43) Date of publication of application: 26.06.1991
(73) Proprietor: AB KINDS PRODUKTER, S-510 95 Dalstorp (SE)
(72) Inventor: BENGTSSON, Lennart, S-510 90 Limmared (SE); MAGNUSSON, Hans, S-416 62 Göteborg (SE)
(74) Representative: Franzén, Lars Hjalmar
(86) International application number: SE8900469
(87) International publication number: WO9002902

(56) References cited:
- CH-A- 194 816
- DE-A- 2 709 426
- FR-A- 2 126 485
- GB-A- 739 464
- GB-A- 1 046 041
- NL-A- 8 203 087
- SE-B- 444 357
- US-A- 2 145 279

## Description

The present invention concerns a method of providing a tensile-stress resistant and fluid-tight joint between two mutually insertable components, said components being tubes, bends, jointing sleeves or connecting boxes used in electrical installations in buildings, wherein an adherent elastic sealing material is applied on at least one of said components on the end thereof facing the opposite one of said components for engagement therewith.

The inventive idea stems from the problems that are encountered in connection with joining together plastic tubes and boxes used in the installation of electrical wiring in buildings.

One such problem is the risk of disengagement or loosening of the joint before the installation of the electrical wiring, a problem which more often than not is caused by insufficient friction between the components forming the joint.

The disengagement problems are even more serious if they arise in wiring tubing that is already covered by wall slabs or similar covering elements. The problem is further aggravated in connection with tubing systems that are intended to be cast into or that already are cast into concrete and similar materials.

In an attempt to alleviate the problems outlined above the electrician usually applies tape around all joints.

According to one prior-art method of providing a joint possessing improved resistance to tensile stress a metal clip is inserted in the tube having the larger cross-sectional dimensions. The metal clips is designed to mechanically cut into the other tube having the lesser cross-sectional dimensions, to provide improved properties of tensile strength.

A serious drawback connected with this method is that it causes a slit to be formed inside the joint (the tube having the larger cross-sectional dimensions takes on an oval shape) with resulting problems when the details are to be cast into concrete.

Because of the slit, water and concrete may leak into the tubing system proper, causing serious problems, such as obturation of the tube with the result that the electrical wires cannot be drawn inside the tube. In addition, in environments where moisture may occur water may seep into the tubing system and cause short-circuiting.

Another problem encountered in connection with this prior-art method is that during the drawing of the electrical wires they may catch in the slit found inside the joint. between the components.

The metal clips are difficult to place in position and their installation is work-consuming/requires a high degree of automatisation. It is not unusual for the clips to become loose before they are put to use, with the result that the intended quality of the joint cannot be obtained.

The purpose of the present invention is to eliminate the problems and disadvantages outlined in the aforegoing in a simple and efficient manner.

This purpose is achieved by the method of claim 1.

The method in accordance with the invention provides a joint which possesses considerable tensile strength and is leak-proof while at the same time it may be used and handled by the electrician in a very convenient manner. To joint together two components, one component is simply pushed into the opposite one. Once this is accomplished, the joint exhibits extremely high tensile strength properties.

GB-A-739464 concerns joining the ends of tubes formed of materials of different hardness, for instance steel and aluminium, for use in refrigerating systems. The joint is to be leak-proof and to cancel differences in linear expansion (and contraction) due to differences in coefficients of expansion. In practical terms, this is effected by providing a first tube with an annular indentation adjacent one end. Fitted closely over this end of the first tube is an end of a second tube formed of a material of less hardness than that of the first tube. Provided between the tubes is a seal formed of a sealing compound adhesive to the materials of both tubes. Press fitted over the end of the second tube and forcing an internal annular portion of the second tube into the annular indentation in the first tube is a sleeve formed of a harder material than the second tube, for example the same material as the first tube.

DE-A-2 709 426 suggests applying a preformed ring of elastic material on one of the components to be joined.

According to NL-A-8 203 087 an annular strip of non-tacky material, consisting of a mixture of at least two separate components, which, upon discontinuation of the separation, form an adhesive layer, is used for connection of the tube parts to be assembled.

The invention will be described in closer detail in the following with reference to the accompanying drawings illustrating some preferred embodiments of the joint and a preferred method of providing a joint of this kind. In the drawings,
Fig. 1 illustrates, in longitudinal sectional views, on the right-hand side a part of a socket of a tube, a bend, a connecting box or a similar component and on the left-hand side a part of a tube the end of which is intended for insertion into the socket,
Fig. 2 illustrates the components in accordance with Fig. 1 when fitted together to provide a tensile-stress resistant and fluid-tight joint between the components,
Fig. 3 illustrates, also in longitudinal sectional view, an alternative embodiment of the socket in accordance with Figs. 1 and 2, and
Fig. 4 illustrates schematically one of several possible methods of providing one of the components, in the shown example the socket, with an elastic material.

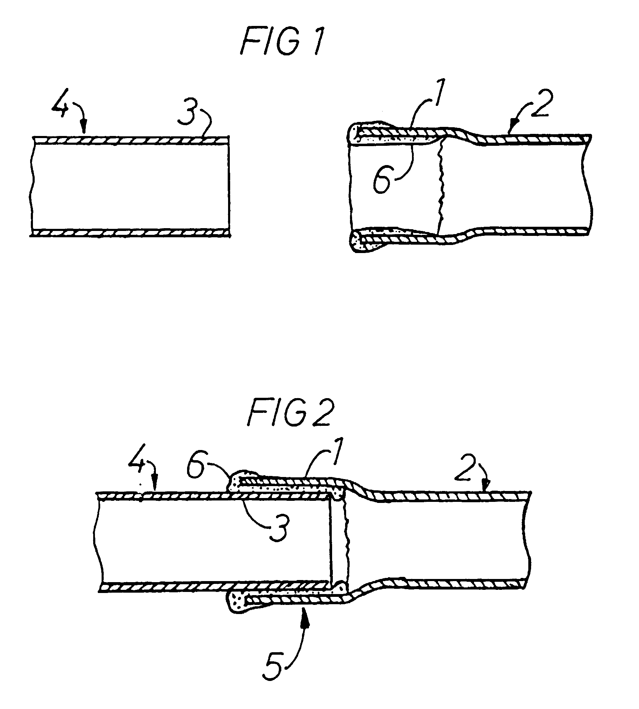

On drawing figures 1 and 2, illustrating a first embodiment of the invention, the right-hand part shows a socket 1 forming part of a component 2, such as a tube, a bend, a jointing sleeve, a connecting box or other similar components of varying nature and dimensions, preferably made of plastics of the kind intended for use in electrical wiring installations in buildings. The left-hand side of Figs. 1 and 2 shows the end 3 of a component 4, such as a tube or similar element, the end 3 being of smaller cross-sectional dimension or diameter size and arranged for insertion into the socket 1 which has a larger cross-sectional size or diameter.

In order to obtain a joint 5 which at the same time possesses tensile-stress resistance and fluid-sealing characteristics an elastic material 6 is applied in accordance with the embodiment illustrated in Figs. 1 and 2 between the two mutually insertable components 2 and 4. In accordance with the embodiment illustrated in Figs. 1 and 2 the elastic material 6 is applied on the component 2 on the end or socket 1 thereof facing the second component 4 for adherence to the end 3 thereof. More precisely, the elastic material 6 is applied on the internal surface of the socket 1 but alternatively it may be applied on the external surface of the tube end 3.

In accordance with the embodiment illustrated in Figs. 1 and 2 the elastic material 6 is applied on the socket 1 by dipping the latter into a bath of liquid or powdery starting material, such as latex. In other words, the elastic material 6 possesses the elastic properties of rubber while at the same time being soft. After the dipping operation, the component is dried and/or vulcanized.

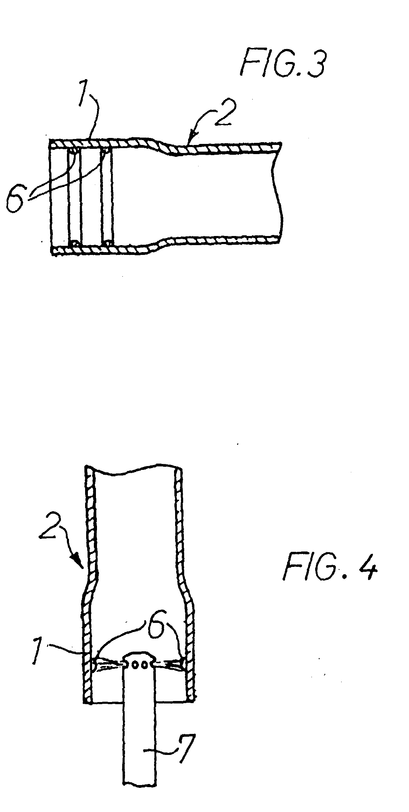

As an alternative, the elastic material may be applied by brushing or by spraying the starting material onto the components. In Fig. 4 is shown one spray-application method. In accordance with this method, a nozzle 7 is inserted into the socket 1 and a jet of the elastic material is thereafter sprayed onto the internal faces of the socket.

Fig. 3 illustrates another embodiment according to which two annular strands of the elastic material 6 is applied on the internal face of the socket 1, for instance with the aid of the nozzle 7 illustrated in Fig. 4.

In the embodiments shown in Figs. 1-3 the application of the elastic material 6 is performed during or in connection with the manufacture proper of the component to be provided with the elastic material. At the time of installation of the component by the electrician no extra work therefore is required but the electrician need only push (press) one component into the other to provide the interconnection.

One of the great advantages of the invention is that owing to the use of an elastic material on either one of the two components the narrow tolerances normally required in jointing operations of components of the kind concerned no longer are necessary in order to achieve satisfactory friction between the surfaces to be joined together.

In addition, the finished joint not only possesses a considerably improved tensile-stress resistance compared with joints using the clip method referred to in the aforegoing but also forms a considerably improved seal against liquids and concrete.

A further possible alternative is to apply the elastic material 6 on either one of the components by applying thereon a suitable powder material or similar product through electrostatic charging followed by heating to melt the material, whereby an elastic surface layer is formed.

Independently of the application method used the elastic material 6 could have a colour which entirely or partly differs from the colour of the components 2 and 4. The purpose of this colour differentiation is to allow the components provided with the elastic material to be easily distinguishable from those that are not and/or allow identification of the components on the basis of dimensions, usage and so on.

## Claims

1. A method of providing a tensile-stress resistant and fluid-tight joint (5) between two mutually insertable components (2, 4), said components being tubes, bends, jointing sleeves or connecting boxes of plastics used in electrical installations in buildings, wherein an (adherent) elastic sealing material (6) is applied on at least one of said components (2 or 4) on the end (1 or 3) thereof facing the opposite one of said components for engagement therewith, by integrally applying the elastic material (6) on a smooth, axially extending surface on said end (1 or 3) so as to form a unit with said opposite component (2 or 4) after said insertion in such a way that use is made of the friction between the facing surfaces of the joint, and of the sealing properties of the material, said application of the elastic material (6) being effected during or in connection with the manufacture of the components (2 or 4).

2. A method as claimed in claim 1, **characterized** by applying said elastic material by dipping into a bath of a liquid or powdery starting material.

3. A method as claimed in claim 1, **characterized** by applying said elastic material (6) on the components (2 or 4) by brushing or spraying the starting material thereon.

## Patentansprüche

1. Verfahren zum Bereitstellen einer Zugfesten und flüssigkeitsdichten Verbindung (5) zwischen Zwei ineinander einschiebbaren Teilen (2, 4), welche Rohre, Bogenstücke, Verbindungshülsen oder Anschlussdosen für in elektrischen Anlagen in Gebäuden verwendete Kunststoffe sind, bei welchem ein anhaftendes, elastisches Abdichtungsmaterial (6) auf mindestens eines der genannten Teile (2 oder 4) an dessen dem entgegengesetzten der genannten Teile zugewandten Ende (1 oder 3) zum Eingriff damit aufgetragen wird, indem das elastische Material (6) auf dieses Ende (1 oder 3) auf eine ebene, sich axial erstreckende Oberfläche integrierend aufgetragen wird, derart, dass nach dem Einschieben eine Einheit mit dem entgegengesetzten Teil (2 oder 4) gebildet wird und dass die Friktion zwischen den einander zugewandten Oberflächen der Verbindung und die Abdichtungseigenschaften des Materials ausgenutzt wird, wobei das Auftragen des elastischen Materials (6) während oder im Zusammenhang mit der Herstellung der Teile (2 oder 4) vorgenommen wird.

2. Verfahren nach Anspruch 1, **gekennzeichnet** durch das Auftragen des elastischen Materials (6) mittels Eintauchens in ein Bad eines flüssigen oder pulvrigen Ausgangsmaterials.

3. Verfahren nach Anspruch 1, **gekennzeichnet** durch das Auftragen des elastischen Materials (6) auf die Teile (2 oder 4) mittels Aufstreichens oder Aufspritzens des Ausgangsmaterials auf diese Teile.

## Revendications

1. Procédé de réalisation d'une connexion (5) résistante à la tension et étanche aux liquides, entre deux composants (2, 4) insérables l'un dans l'autre, lesdits composants étant des tubes, courbures, douilles de raccord ou boîters de connexion en matériaux plastiques et étant utilisés dans les installations électriques de bâtiments, selon lequel un matériau d'étanchéité elastique adhérent (6) est appliqué sur au moins un desdits composants (2 ou 4) à l'extrémité (1 ou 3) de celui-ci qui fait face au composant opposé desdits composants pour entrer en prise avec celui-ci, le matériau élastique (6) étant appliqué intégralement sur ladite extrémité (1 ou 3) sur une surface lisse de celle-ci qui s'étend en direction axiale, de façon à former avec ledit composant opposé (2 ou 4) une unité après ladite insertion, d'une telle manière que l'on profite de la friction entre les surfaces se faisant face de la connexion, ainsi que de de la capacité d'étancher que possède le matériau, ladite application du matériau élastique (6) étant effectuée pendant ou en relation avec la fabrication des composants (2 ou 4).

2. Procédé selon la revendication 1, **caractèrisé** en ce que l'on applique le matériau élastique par trempage dans un bain d'un matériau initial liquide ou pulvérulent.

3. Procédé selon la revendication 1, **caractérisé** en ce que l'on applique le matériau élastique (6) sur les composants (2 ou 4) par brossage ou pulvérisation du matériau initial sur ceux-ci.
